Europäisches Patentamt

European Patent Office

Office européen des brevets

(11) Numéro de publication: **0 380 888**
**A1**

# (12) DEMANDE DE BREVET EUROPEEN

(21) Numéro de dépôt: 89400215.3

(22) Date de dépôt: 26.01.89

(51) Int. Cl.5: **C05F 15/00, B01F 13/10**

(43) Date de publication de la demande:
**08.08.90 Bulletin 90/32**

(84) Etats contractants désignés:
**BE CH DE ES IT LI NL**

(71) Demandeur: **Guasco, Roger Adrien**

**F-11170 Moussoulens(FR)**

(72) Inventeur: **Guasco, Roger Adrien**

**F-11170 Moussoulens(FR)**

(54) **Mécanisation d'un procédé pour transformation de déchets en engrais.**

(57) L'invention concerne un dispositif mécanique et chimique permettant de traiter tous déchets organiques afin de les transformer en engrais.

Le dispositif inventif est constitué d'un ensemble de stockage et de chargement de produits cellulosiques végétaux ou industriels, d'un ensemble mélangeur innovant, d'un ensemble de traitement chimique par le Péroxyde d'hydrogène et l'Acide Phosphorique, d'un ensemble de distribution de produits annexes, d'un ensemble de séchage du produit fini et un ensemble d'automatisation de l'appareil.

Le dispositif est particulièrement destiné à tous traitements des déchets organiques et notamment les déchets liquides provenant des élevages horssol, ( lisiers), des stations d'épuration, ( boues résiduelles), de l'industrie agro alimentaire, ( laiteries, conserveries, abattoirs, tanneries, ect..)

La présente invention concerne un dispositif permettant de traiter mécaniquement et chimiquement tous les déchets organiques, (lisiers animaux et humains, boues résiduelles de toutes sortes, etc..)

L'élimination de ces déchets se fait actuellement par des procédés divers et malaisés, ou bien en laissant entièrement la pollution bactérienne, (épandage, stockage en fosse, déversement dans des failles atteignant les nappes phréatiques..), ou bien par des procédés onéreux et complexes ne récupérant que peu de matière première,( méthanisation,centrifugation,station d'épuration, lombriculture, etc..)

Le dispositif selon l'invention permet de remédier à ces inconvénients. Il permet, en effet, un traitement instantané, une disparition complète des pollutions par les nitrates et les bactéries, une disparition des nuisances diverses et des odeurs, une récupération complète des matières premières sous forme d'amendements enrichis en engrais.

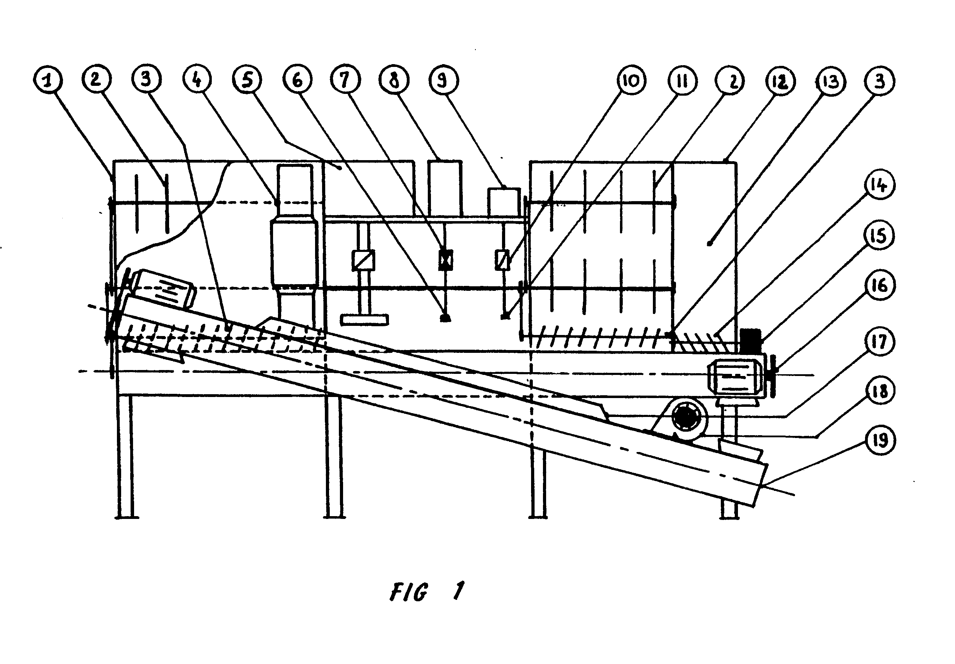

Selon un dispositif préférentiel, l'appareil de base décrit ci-après, est composé de deux trémies d'alimentation, (N°1 et 12 figure 1), munies chacune de casse-voûtes, (N°2 figure 1), pour faciliter l'écoulement du produit, et d'une vis d'extraction (N°3 figure 1), en fond de trémie pour réguler le débit.

Afin de faciliter l'écoulement des produits végétaux asséchants, (tourbe, raffle de maïs etc..), les trémies sont trois faces verticales et la dernière face oblique.

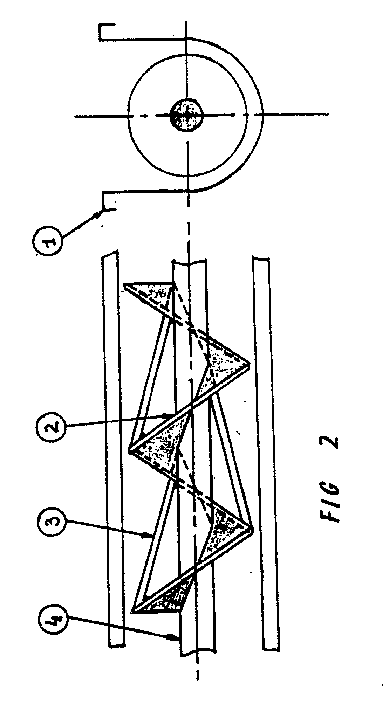

La trémie N°1 figure 1 se déverse dans une vis d'Archimède classique en auge, ( N°16 figure 1), modifiée par l'ajout de malaxeurs, ( N°3 figure 2). Selon ce procédé de réalisation préférentielle, ce malaxeur sera constitué par des barres métalliques, (N°3 figure 2), soudées à chaque pas, du haut du filet, ( N°2 figure 2), à l'axe de la vis, (N°4 figure 2).

Cette vis mélangeuse a pour but de transporter le produit en le malaxant.

L'appareil est muni d'une cuve de passage, ( N°5 figure 1), contenant les produits à traiter.

Ceux-ci sont déversés dans la vis mélangeuse, ( N°16 figure 1), remplie de produits asséchants provenant de la première trémie, ( N°1 figure 1).

L'appareil est muni d'une cuve, ( N°8 figure 1), contenant du péroxyde d'hydrogène concentré (H2O2).

Parallèlement au déversement des déchets organiques, le péroxyde d'hydrogène est pulvérisé dilué grâce à un système de type venturi, dans des proportions 1/3 H2O2, et 2/3 eau. Le système fonctionne avec le réseau d'adduction d'eau courante.

La pulvérisation est obtenue au moyen d'une pompe, (N°7 figure 1), et de buses, ( N°6 figure 1), ce qui a pour but de faire pénétrer en profondeur la solution oxydante dans la matière organique. Cette injection en pression d'H2O2 permet d'augmenter son efficacité pour une quantité minimale utilisée.

L'appareil peut-être muni d'un dispositif d'adjonction d'acide phosphorique, ( H3PO4 ), comprenant une cuve, ( N°9 figure 1), une électrovanne, (N°10 figure1), et une buse, (N°11 figure 1).

Le mélange ainsi constitué reçoit de la trémie, (N°12 figure 1), un support cellulosique complémentaire, ( paille, son, sciure, etc..), afin de compléter la texture du produit.

Dans la trémie (N°12 figure 1), il est réservé un compartiment, ( N°13 figure 1), pour l'adjonction d'unités fertilisantes ou autres, ( nitrate, phosphate, potasse, etc..). Le déversement de ces produits se fera à l'aide de la vis doseuse, ( N°14 figure 1), équipée d'un petit moteur variateur, ( N°15 figure 1), permettant un dosage régulier et modifiable à volonté.

Le produit obtenu se déverse dans la vis, (N°19 figure 1), identique à la vis, ( N°16 figure1).

Elle est inclinée d'environ 20° pour que la sortie de l'appareil soit accessible à son utilisateur.

La fonction de cette seconde vis, (N°19 figure 1), est de continuer le mélange des différents produits afin que celui-ci soit bien homogène.

Lors de son parcours, cette vis dont le couvercle est en forme de toit, reçoit une ventilation, ( N°18 figure 1), un rayonnement infra-rouge, ( N°17 figure 1), et un système d'aspiration, ( N°4 figure 1), permettant l'évacuation de l'humidité.

Par mesure d'économie, les dispositifs de casse-voûtes, (N°2 figure 1), et de vis d'extraction, ( N°3 figure 1), sont entrainés par le moto-réducteur de la vis, (N°16 figure 1), au moyen de chaines, de pignons et d'arbres de transmission.

Pour des facilités de fonctionnement, l'ensemble de l'appareil est prévu automatisé, les différents circuits hydrauliques étant commandés par des électrovannes et des pompes.

Différents capteurs de présence, relais d'intensité, permettront, grâce à un automate programmable, de gérer le fonctionnement de la machine.

L'appareil sera prévu entièrement caréné afin d'éviter les manipulations dangereuses.

L'appareil décrit peut-être directement utilisé dans les élevages hors sol, afin de traiter les lisiers.

Bien entendu, l'invention n'est nullement limitée au mode de réalisation décrit et illustré, celui-ci est donné ici à titre d'exemple.

En particulier, le mode de chargement de la vis mélangeuse en produits végétaux, ( trémie- casse-voûte), peut-être conçu différemment. Par exemple, utilisation d'extracteurs à tourbe, de sauterelles, chargement divers, etc..

En ce qui concerne la fonction mélangeur, tout autre procédé comme vis à palette, cuve mélangeuse, toupie, bétonnière etc.. peut-être utilisé de façon continue ou discontinue.

En outre, il est bien entendu que la combinaison des différents éléments de constitution de cette machine n'a été donnée qu'à titre d'exemple, et que l'on peut y adjoindre d'autres éléments suivant les besoins tels que centrifugeuse, ( en cas d'utilisation de déchets plus liquides comme dans les stations d'épuration), broyeurs, (pour les déchets plus solides), appareils de mise en sac etc...

## Revendications

1) Dispositif de traitement des déchets organiques de toute origine, caractérisé en ce qu'il utilise un ensemble de stockage et de chargement de produits cellulosiques, un ensemble mélangeur, un ensemble de traitement chimique par H2O2, un ensemble de traitement chimique par H3PO4, un ensemble de distribution de produits annexes, un ensemble de séchage du produit obtenu et un ensemble d'automatisation de l'appareil.

2) Dispositif selon la revendication 1, caractérisé par un ensemble de chargement de produits cellulosiques comportant deux trémies (1, 12; Fig1), avec casse-voûtes (2; Fig1) et vis d'extraction (3; Fig1).

3) Dispositif selon la revendication 1, caractérisé en ce qu'il comprend deux vis d'archimède (16, 19; Fig1), modifiées en vis mélangeuses (3; Fig2).

4) Dispositif selon la revendication1, caractérisé en ce qu'il comporte un ensemble de traitement chimique par H2O2, comprenant une cuve de stockage (8; Fig1), un système dit de venturi, une pompe (7; Fig1), des buses de pulvérisation (6; Fig1) permettant l'adjonction de H2O2.

5) Dispositif selon la revendication 1, caractérisé en ce qu'il comporte un ensemble de pulvérisation d'H3PO4 (9, 10, 11. Fig1).

6) Dispositif selon la revendication 1, caractérisé en ce qu'il comporte un ensemble de distribution de produits annexes (13;Fig1) tels que: unités fertilisantes N,P,K....comprenant une vis doseuse (14; Fig1), régulée par moto-variateur (15; Fig 1).

7) Dispositif selon la revendication 1, caractérisé en ce qu'il comporte une ensemble de séchage comprenant un chauffage infra-rouge (17; Fig1), une ventilation (18; Fig 1) et extraction forcées (4; Fig1).

8) Dispositif selon la revendication 1, caractérisé en ce qu'il comporte un ensemble d'automatisation comprenant: electro-vannes, capteurs divers, relais d'intensité, automate programmable.

FIG 1

FIG 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | CHEMICAL ABSTRACTS, vol. 81, no. 17, 28 octobre 1974, page 405, no. 103944n, Columbus, Ohio, US; & JP-A-74 30 145 (ASAHI HIRYO CO. LTD) 18-03-74 * Résumé * | 1,4,5 | C 05 F 15/00 B 01 F 13/10 |
| Y | CHEMICAL ABSTRACTS, vol. 77, no. 21, 20 novembre 1972, page 353, no. 138897u, Columbus, Ohio, US; G.C. CONSTANTINESCU: "Technique of annual plant humification. III. Treatment of straw with phosphoric acid and hydrogen peroxide", & BUL.INST.POLITEH. "GHEORGHE GHEORGHIU-DEJ" BUCURESTI 1971, 33(3), 39-46 * Résumé * | 1,4,5 | |
| Y | FR-A-2 281 908 (F.C. CORPORATION) * Revendications * | 1 | |
| Y | FR-A-1 560 470 (ENTREPRISE MINIERE ET CHIMIQUE EX-OFFICE NATIONAL INDUSTRIEL DEL'AZOTE) * Page 2, colonne de gauche, ligne 53 - page 3, colonne de gauche, ligne 24, résumé * | 1,3-6,8 | DOMAINES TECHNIQUES RECHERCHES (Int. Cl.5) |
| Y | GB-A-1 070 357 (L. BULMER) * Figure 2; page 2, lignes 30-49; revendications * | 3 | C 05 F C 05 D B 01 F B 28 C |
| A | | 2 | |
| Y | US-A-3 140 921 (J.K. BARROW Jr.) * Figure 1; colonne 2, ligne 52 - colonne 5, ligne 17 * -/- | 1,4-6 | |

Le présent rapport a été établi pour toutes les revendications

| Lieu de la recherche | Date d'achèvement de la recherche | Examinateur |
|---|---|---|
| LA HAYE | 20-09-1989 | SCHUT,R.J. |

**Office européen des brevets**

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | | 2 | |
| A | FR-A- 831 920 (L'AUXILIAIRE DES CHEMINS DE FER ET DE L'INDUSTRIE) * Résumé * | 1 | |
| A | FR-A-2 586 163 (R. GUASCO) * Revendications * | 1 | |
| A | DE-C- 42 071 (W. REGENER) * Revendications * | 1 | |
| A | DE-A-2 808 489 (F. MANCHAK, Jr.) * Figure 1; page 14, ligne 27 - page 17, ligne 32 * | 1-3 | |
| A | FR-A-2 376 689 (SERTEC) * Revendications * | 1-8 | |
| A | FR-A-2 321 319 (BANBURY BUILDINGS HOLDING Ltd.) * Revendications * | 1-8 | DOMAINES TECHNIQUES RECHERCHES (Int. Cl.5) |
| A | FR-A-2 530 157 (PROTEINOR) * Page 6, lignes 6-9; figure 1 * | 2 | |

Le présent rapport a été établi pour toutes les revendications

| Lieu de la recherche | Date d'achèvement de la recherche | Examinateur |
|---|---|---|
| LA HAYE | 20-09-1989 | SCHUT,R.J. |